# EUROPEAN PATENT APPLICATION

(11) **EP 1 148 720 A1**
(43) Date of publication of application: **24.10.2001**
(21) Application number: 00201486.8
(22) Date of filing: 20.04.2000
(51) Int. Cl.: H04N 5/50, H04N 5/445

(54) **Channel switching**

(71) Applicant: Koninklijke Philips Electronics N.V., 5621 BA Eindhoven (NL)
(72) Inventor: Hoogerbrugge Jan c/o Internationaal Octrooibureau, 5656 AA Eindhoven (NL); Baas Ramon Johan Wessel c/o Internationaal Octrooi, 5656 AA Eindhoven (NL)
(74) Representative: Steenbeek, Leonardus Johannes

(57) **Abstract**

In a method of channel switching, a first tuner (T1) is tuned (CP) to a first channel, an output signal of the first tuner (T1) is applied (CC) to further processing circuitry (FP), a likely next channel is predicted (CP), a second tuner (T2) is tuned (CP) to the likely next channel, and an output signal of the second tuner (T2) is applied (CC) to the further processing circuitry (FP) upon receipt of a channel switching command.

## Description

The invention relates to a method and device for channel switching.

TV sets commonly have a remote control that enables a user to select the next channel by means of P+/P- buttons. For example, if the TV set is tuned to BBC1, a likely next choice will be BBC2. Going from BBC1 to BBC2 is achieved by pushing the P+ button, while going from BBC2 to BBC1 is achieved by pushing the P- button.

It is, inter alia, an object of the invention to provide a faster channel switching. To this end, the invention provides a channel switching as defined in the independent claims. Advantageous embodiments are defined in the dependent claims.

In one embodiment, a second TV tuner, which is often already available in high-end TV sets, is used to enable a fast channel switch (zapping). While watching one channel, a prediction can be made of the channel the user will probably next want to see. This depends, for example, on the current channel number, zap-direction (up/down), and previous behavior. This zap prediction can be used to already tune the other TV tuner, enabling a fast switch between 2 channels upon selection.

As an extension, sensors could be put into the remote control to detect the location of a user's finger above essential zap buttons, like channel up/down. These sensors would give a high prediction rate of the next channel, before the actual pressing of the button. This provides an even faster reaction of TV set on a channel switch command.

These and other aspects of the invention will be apparent from and elucidated with reference to the embodiments described hereinafter.

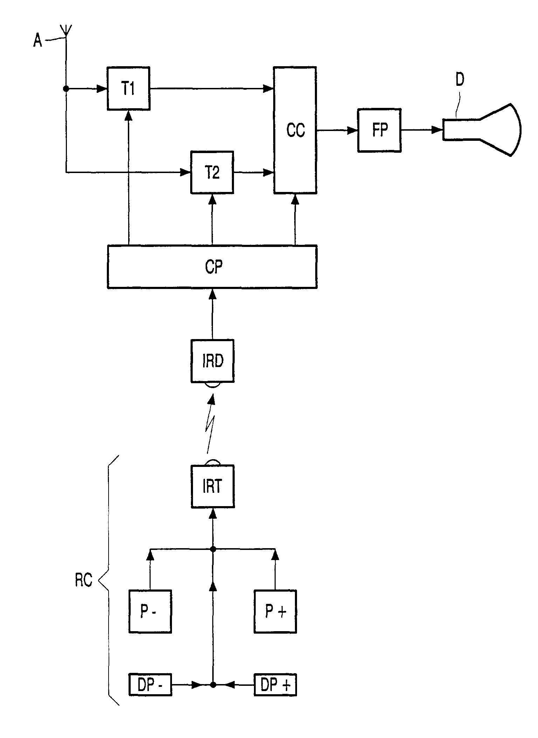

The drawing shows a block diagram of an embodiment of a TV set in accordance with the invention.

In the drawing, a first tuner T1 and a second tuner T2 receive antenna signals from an antenna A. Output signals of the tuners T1, T2 are applied to a further processing circuit FP by means of a connection circuit CC. A display D displays the output signal of the further processing circuit FP. The tuners T1, T2, the connection circuit CC and the further processing circuit FP are controlled by a control processor CP. An input of the control processor CP is connected to an output of an infra-red detector IRD that receives infra-red signals from a remote control RC. The remote control RC comprises, inter alia, a channel up button P+ and a channel down button P-, outputs of which are connected to an infra-red transmitter IRT. In one embodiment, the remote control RC further comprises detectors DP-, DP+ for detecting whether the buttons P-, P+ are likely to be pressed. The detectors DP-, DP+ could detect the reduced amount of light (shadow of a user's finger), disturbances of an electro-magnetic field caused by the presence of the user's finger, and/or an increased temperature caused by the user's finger. Outputs of the detectors DP-, DP+ are also connected to the infra-red transmitter IRT.

A primary aspect of the invention can be summarized as follows. In a method of channel switching, a first tuner T1 is tuned by means of a control processor CP to a first channel, an output signal of the first tuner T1 is applied by means of a connection circuit CC to further processing circuitry FP, a likely next channel is predicted by means of the control processor CP, a second tuner T2 is tuned by means of the control processor CP to the likely next channel, and an output signal of the second tuner T2 is applied by means of the connection circuit CC to the further processing circuitry FP upon receipt of a channel switching command.

It should be noted that the above-mentioned embodiments illustrate rather than limit the invention, and that those skilled in the art will be able to design many alternative embodiments without departing from the scope of the appended claims. While TV sets are discussed above, the invention can also be applied with radio tuners. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A method of channel switching, the method comprising the steps of:
tuning (CP) a first tuner (T1) to a first channel;
applying (CC) an output signal of the first tuner (T1) to further processing circuitry (FP);
predicting (CP) a likely next channel;
tuning (CP) a second tuner (T2) to the likely next channel; and
applying (CC) an output signal of the second tuner (T2) to the further processing circuitry (FP) upon receipt of a channel switching command.

2. A method as claimed in claim 1, wherein the predicting step (CP) comprises the step of taking as likely next channel a channel that is adjacent to the first channel in a predefined series of channels.

3. A method as claimed in claim 2, wherein the likely next channel is a channel that follows the first channel in the predefined series of channels if the first channel has been selected following an earlier selection of a channel preceding the first channel in the predefined series of channels.

4. A method as claimed in claim 1, wherein the predicting step (CP) comprises the step of detecting (DP-, DP+) which button (P-, P+) on a control device (RC) is likely to be pressed.

5. A receiver, comprising:
at least first (T1) and second (T2) tuners;
further processing circuitry (FP);
means (CP) for tuning the first tuner (T1) to a first channel;
means (CC) for applying an output signal of the first tuner (T1) to the further processing circuitry (FP);
means (CP) for predicting a likely next channel;
means (CP) for tuning the second tuner (T2) to the likely next channel; and
means (CP) for applying an output signal of the second tuner (T2) to the further processing circuitry (FP) upon receipt of a channel switching command.
